# EUROPEAN PATENT APPLICATION

(11) **EP 2 292 419 A2**
(43) Date of publication of application: **09.03.2011**
(21) Application number: 10170715.6
(22) Date of filing: 23.07.2010
(51) Int. Cl.: B30B 11/22, B30B 11/26

(54) **Method and apparatus for obtaining combustible material from waste vegetable material**

(30) Priority: 23.07.2009 IT PI20090092
(71) Applicant: Cattani, Sergio, 56023 Cascina (IT); Cattani, Carlo, 56021 Cascina (IT); Bimbi, Federico, 56122 Pisa (IT); Bertini, Simone, 56017 San Giuliano Terme (IT); Cipresso, Letizia, 56023 Cascina (IT); Kinsky Dal Borgo, Francesco, 56010 San Giuliano Terme (IT); Marchetti, Leonardo, 56010 San Giuliano Terme (IT); Rifici, Alessandro, 56100 Pisa (IT); Santoro, Fabio, 56125 Pisa (IT); Grassini, Fabio, 56124 Pisa (IT); Piana, Sara, 56124 Pisa (IT); Rossi, Francesco, 56017 San Giuliano Terme (IT); Munda, Matteo, 54033 Massa (IT); Bottaro, Barbara Maria Laura, 56023 Cascina (IT)
(72) Inventor: Cattani, Sergio, 56023 Cascina (IT)
(74) Representative: Celestino, Marco

(57) **Abstract**

An apparatus (1) to prepare a fuel product starting from a waste material of vegetable origin (10) comprises a treatment chamber (20) of tubular shape and defined laterally by a wall (21) at least in part equipped with a plurality of holes (25). The treatment chamber (20) comprises a loading mouth (22) for introducing a predetermined amount of waste material (10), and has a port (30) movable between a closed position (201) and an open position (202). In the treatment chamber (20) a press means (40) operates that is adapted to press the waste material (10), in order to cause the exit of the humidity present inside and to make a dehumidified waste material (15). Once the rate of humidity has been reduced below a predetermined value, the port (30) is brought from the closed position (201) to the open position (202) and the press means (40) pushes the dehumidified product (15) outside of the treatment chamber (20) obtaining a protruding portion (11). This is then cut from the cutting means obtaining a cut portion (19). [Fig. 1]

## Description

### Field of the invention

The present invention relates to the field of transforming agricultural products; in particular, it relates to a method to obtain fuel material starting from production waste of vegetable origin, in particular from olive oil production waste.

The invention relates, furthermore, to an apparatus that carries out this method.

### Description of the prior art

As well known, waste material of vegetable origin, such as olive oil production waste, can be disposed of in a dump or, alternatively, it can be treated to obtain a by-product that can be used in applications of various type.

In particular, the residual solid waste obtained by the olive oil production process, so-called "virgin olive residues", has a high rate of humidity that changes according to the production process from about 45% to about 65%. This high rate of humidity limits in particular its use as fuel for household stoves.

In the prior art, various solutions exist for reducing the rate of humidity of materials of various nature with different purposes.

For example, in FR509157 an apparatus is described for squeezing fruit. In particular, the document describes a press that is operated by a crank mechanism and that compresses the fruit present in a cylinder causing a separation of a liquid fraction, i.e. juice, which is extracted through a plurality of holes, from a solid fraction, comprising peelings, seeds, etc., that instead falls onto the bottom of the cylinder and is discharged through an outlet.

In EP1903094, instead, a manual extraction device is described for extraction of vegetable oil from vegetable material.

In JP2005014072, instead, an apparatus is described to obtain bricks starting from clay or muddy material. In this case, the clay or muddy material, is compressed in a pressing chamber. The latter has a wall equipped with holes. Therefore, during the pressing step in the pressing chamber of the clay/muddy material, the water in it present is caused to cross the holes, in order to decrease the rate of humidity. Then, the dehumidified muddy material is discharged obtaining a brick.

None of the documents above cited is therefore oriented to dehumidification of a waste material of vegetable origin, such as olive residues, to obtain a fuel product.

A solution proposed for reducing specifically the content of humidity of olive residues is described, instead, in IT1290778. In this case, the olive residues are dehydrated by a chemical reaction with calcium oxide, CaO, and preferably with further reactants, such as nitrogenous substances, phosphatic products, P₂O₅, or potassic products, K₂O.

However, the process described in IT1290778 as well as similar processes that provide a chemical reaction of the olive residues have some drawbacks.

In particular, the use of chemical reagents, in addition to high costs of the used chemical substances and then of the whole process, causes a contamination of the olive residues that once dehydrated have to be subject to further processes of purification for removing the pollutants in it present. Furthermore, the chemical reaction does not allow to obtain a high reduction of the content of humidity of the olive residues and therefore the final product has a low heating power that prevents a use as fuel for household heating.

### Summary of the invention

It is then a feature of the present invention to provide a method to obtain fuel material starting from production waste of vegetable origin that makes it possible to obtain a fuel product having a high heating power and then that can be used in particular as fuel for household heating.

It is another feature of the present invention to provide a method to obtain fuel material starting from production waste of vegetable origin that makes it possible to obtain a fuel product, such as briquets having a desired size.

It is a further feature of the present invention to provide a method to obtain fuel material starting from production waste of vegetable origin that allows a considerable energy saving with respect to similar solutions of the prior art.

It is a particular feature of the present invention to provide an apparatus to obtain fuel material starting from production waste of vegetable origin that is compact and can be easily installed near a production plant of the starting vegetable material.

These and other features are accomplished with one exemplary process for preparing a fuel product starting from a waste material of vegetable origin whose main feature is that it comprises the steps of:
- introducing a predetermined amount of said waste material of vegetable origin in a treatment chamber, said treatment chamber defined laterally by a wall at least in part equipped with a plurality of holes and equipped with a loading mouth of said waste material;
- pressing said waste material in said treatment chamber through a press means, said pressing causing removal of the humidity present in said waste material through said plurality of holes making a dehumidified waste material, wherein an opening/closing port can move between a closed position of said treatment chamber and an open position of the chamber same;
- opening said treatment chamber to achieve a rate of humidity of said material treated less than a predetermined value, said opening being carried out by moving said opening/closing port to said open position;
- moving said dehumidified product within said treatment chamber up to obtain a dehumidified product portion protruding from said treatment chamber, said moving caused through said press means;
- cutting said dehumidified product protruding portion obtaining a cut portion, said cutting made through a cutting means;
- discharging said cut portion of said dehumidified product to a collection area.

Advantageously, said port is located opposite to the press means with respect to the waste material and the press means presses the waste material against a press surface of said opening/closing port of said treatment chamber.

In particular, the waste material of vegetable origin can be a vegetable loose product.

Advantageously, the waste material of vegetable origin can be obtained by squeezing vegetables.

In particular, the waste material of vegetable origin can be a waste material of an olive oil production plant, i.e. for example an oil mill.

Advantageously, the waste material of vegetable origin consists of olive residues.

In particular, at the end of the cutting step of said, or each, protruding portion of the dehumidified product the opening/closing port of the treatment chamber returns to the closed position.

Advantageously between the step of pressing the waste material and the step of opening the treatment chamber a step is provided of division of the dehumidified product obtaining a divided product, for example in blocks, of predetermined size.

In particular, the step of division is made forcing the product that has been dehumidified by the press means through a division means arranged between the press means and the press surface of the opening/closing port of the treatment chamber.

Advantageously, at the end of the cutting step of said, or each, portion of the dehumidified product protruding from the treatment chamber a step is provided of returning the opening/closing port from the open position to the closed position of the treatment chamber. Once the opening/closing port is returned to the closed position, the press means is operated again for pressing further the residue portion of dehumidified product present in the treatment chamber. This way, the rate of humidity of the residue portion is reduced further.

Advantageously, the opening/closing port of the treatment chamber is slidingly arranged along rails that are substantially orthogonal to the treatment chamber.

In particular, a plurality of steps can be provided of pressing the waste material of vegetable origin present in the treatment chamber.

More in detail, between two successive pressing steps the following steps are provided:
- opening said treatment chamber;
- moving the dehumidified product present in the treatment chamber up to obtain a portion protruding from said chamber;
- cutting the protruding portion of dehumidified product;
- closing said treatment chamber.

In an exemplary embodiment, the cutting step is effected by the opening/closing port when passing from said open position to said closed position. More in detail, the opening/closing port has at least one cutting edge, such that the cutting step is carried out by the cutting edge of the opening/closing port, which cuts the protruding portion of dehumidified product when passing from the open position to the closed position.

In this case, and opposite to the open position of the opening/closing door with respect to the treatment chamber, a hopper is provided into which the product cut portion is discharged, i.e. the briquet, or the block of dehumidified product.

In an exemplary embodiment of the invention, the opening/closing port has a first cutting edge and a second cutting edge opposite to the first cutting edge. In this case, the opening/closing port is movable between a first open position, a closed position and then a second open position opposite to the first open position with respect to the treatment chamber. Therefore, a first hopper and a second hopper are provided arranged at opposite sides with respect to the treatment chamber. More precisely, when the opening/closing port turns from the first open position to the closed position, the cut portions of said dehumidified product are accumulated in the second hopper, whereas when the opening/closing port turns from the second open position to the closed position, the cut portions of said dehumidified product are accumulated in the first hopper.

More precisely, the opening/closing port achieves in addition to the cutting step also a step of discharging the cut portion into a storage zone.

In an exemplary embodiment of the invention, the cutting phase of the dehumidified product is made through a cutting means comprising at least one blade, for example a rotating blade, which is arranged downstream of the treatment chamber.

Advantageously, downstream of the step of discharging a step is provided of drying said dehumidified cut product.

In particular, the drying step is adapted to reduce further the content of humidity of the dehumidified product obtaining a dried product.

Advantageously, the press means is of hydraulic type and comprises at least one hydraulic actuator having a cylinder in which a dividing wall is slidingly mounted. More precisely, the dividing wall is connected to one end of a stem having the other end connected to a pushing element adapted in use to compress the waste material present in the treatment chamber.

In an exemplary embodiment, the pushing element has a recess. More precisely, the surface of the pushing element that in use is oriented towards the product to treat has a plurality of holes. Each hole can be, furthermore, associated with a containing element, or tooth, with a substantially L-shaped cross section which is adapted to prevent the product to go beyond the surface, and for causing at the same time the water extracted to pass in the recess and from there to flow out through the lateral apertures.

Advantageously, the bottom of the recess can be chute-shaped to assist the outflow towards the lateral apertures.

In particular, the dividing wall of the hydraulic actuator divides the cylinder into a first and a second recess that are filled, in use, by a hydraulic fluid. During the pressing step of the waste material of vegetable origin, the hydraulic fluid present in the first recess is heated by the pumping action made by the hydraulic control unit. The hydraulic fluid present in the second recess is heated instead mainly by friction. The hot hydraulic fluid has to be, therefore, periodically cooled for not affecting the correct operation of the hydraulic actuator.

The cooling step of the hydraulic fluid can be carried out by a hydraulic control unit that periodically causes the hot hydraulic fluid to recirculate in a hydraulic circuit. More precisely, when cooling, the hydraulic fluid present in the first and in the second recess is sucked away and recirculated in the hydraulic circuit where is cooled by air, for example by a fan. The heat subtracted to the hydraulic fluid is, in this case, exchanged with the surrounding environment.

Alternatively, the heat can be subtracted to the hydraulic fluid through a heat recovery means, for example comprising an air/hydraulic fluid heat exchanger. In this case, the recovery means subtracts heat from the hydraulic fluid and deliver it to the dehumidified cut product.

Advantageously, before the cutting step a grinding step is provided for grinding said dehumidified product present in the treatment chamber obtaining a ground product.

In particular, the grinding step is followed by a step of pressing the ground product. This way, the step is optimized of dehumidifying the treated product.

Advantageously, furthermore, a step is provided of controlling determined process parameters for testing the correct devlopment of the process. More in detail, the step of controlling comprises a control step that is carried out by a control unit, which controls the data measured through a plurality of sensors, such as temperature, pressure sensors, etc., that allow a complete automatization of the process above described.

In particular, the verification of the control unit checks whether the temperature T of the hydraulic fluid present in the hydraulic actuator is less than a threshold determined value T*. When the temperature T of the hydraulic fluid achieves the temperature T*, then the cooling step is started, with, or without, heat recovery, of the hydraulic fluid.

Advantageously, furthermore, a step is provided of cleaning said treatment chamber, said cleaning step adapted to remove possible solid residues deposited in the holes of the side wall of the treatment chamber.

In particular, the step of cleaning said chamber is carried out during a step of withdrawing said pushing element in the treatment chamber, said step of withdrawing occurring once said dehumidified product has been completely discharged from the treatment chamber. More precisely, at the end of the step of withdrawing, the hydraulic actuator is arranged in a starting position at which the waste material of vegetable origin is put into the treatment chamber.

According to another aspect of the invention, an apparatus to make a fuel product starting from a waste material of vegetable origin comprises:
- a treatment chamber of the waste material of vegetable origin, said treatment chamber defined laterally by a wall at least in part equipped with a plurality of holes and comprising a loading mouth through which a predetermined amount of said waste material of vegetable origin is put into said treatment chamber;
- an opening/closing port of said treatment chamber, said port movable between an open position and a closed position of said treatment chamber;
- a press means that acts in said treatment chamber, said press means adapted to press said waste material present in said treatment chamber, in order to cause the exit of the humidity present in said waste material through said plurality of holes obtaining a dehumidified waste material;
- a cutting means that is adapted to cut at least one portion of said dehumidified product protruding from said treatment chamber, said protruding portion being pushed outside of said treatment chamber by said press means, said cutting means cutting said protruding portion obtaining a cut portion that is delivered to a collection area.

In particular, the opening/closing port of the treatment chamber can be located opposite to said press means, said press means pressing said waste material present in said treatment chamber against a pressing surface of said opening/closing port oriented towards said treatment chamber.

Advantageously, the opening/closing port of the treatment chamber is slidingly arranged along rails that are substantially orthogonal to the treatment chamber. In particular, the opening/closing port slides along the rails for moving from said closed position to said open position and vice-versa.

In particular, the opening/closing port of the treatment chamber is adapted to move from a closed position of the treatment chamber, in which the press means presses the waste material of vegetable origin present in the treatment chamber, to an open position, in which the press means is adapted to push said dehumidified product up to cause a predetermined portion of it to exit outside of the treatment chamber.

In an exemplary embodiment, the opening/closing port has at least one cutting edge that is adapted to cut the protruding portion of the dehumidified product when passing from the open position, laterally to the treatment chamber, to the closed position.

In this case, laterally with respect to the treatment chamber and opposite to the open position of the opening/closing door, a hopper is provided into which the portion of dehumidified cut product is discharged.

In an exemplary embodiment of the invention, the opening/closing port has a first cutting edge and a second cutting edge opposite to the first cutting edge.

In this case, the opening/closing port is movable from a first open position, to a closed position and to a second open position opposite to the first open position with respect to the treatment chamber. Therefore, a first hopper and a second hopper are provided arranged laterally with respect to the treatment chamber at opposite sides.

In an exemplary embodiment of the invention, the cutting means comprises at least one blade, for example a rotating blade, which is arranged downstream of the treatment chamber.

Advantageously between the press means that presses the waste material and the opening/closing port of the treatment chamber a means is provided for division of the dehumidified product to obtain a divided product of predetermined size.

In particular, the division means can comprise at least one cable, for example a metal cable, against which the dehumidified product is pressed for dividing it into a corresponding number of blocks of dehumidified product. In this case, the cutting means is adapted to cut the blocks of dehumidified product into briquets of predetermined size.

Advantageously, a drying means is provided for reducing further the content of humidity of the dehumidified product obtaining a dried product.

In particular, the hydraulic actuator comprises a dividing wall that is adapted to divide the hydraulic actuator into a first and a second recess. During the operation of the hydraulic actuator the hydraulic fluid present in the first recess is compressed and then is heated. The hot hydraulic fluid has to be, therefore, periodically cooled for not affecting the correct operation of the hydraulic actuator.

The cooling of the hydraulic fluid can be carried out by a hydraulic control unit that periodically causes the hot hydraulic fluid to recirculate in a hydraulic circuit cooled by air. The heat subtracted to the hydraulic fluid can be then exchanged with the surrounding environment.

Alternatively, the heat can be subtracted to the hydraulic fluid through a heat exchange means, for example comprising an air/hydraulic fluid heat exchanger. More in detail, the heat exchange means is adapted to subtract heat from the hydraulic fluid and to exchange it with an air flow. The hot air flow thus obtained is then used to run down the dehumidified cut product, for example in the hopper, or in a storage reservoir, in order to dry it.

Advantageously, the side surface of the treatment chamber can be equipped with a plurality of slides adapted to assist the outflow of the water extracted from the waste material in a storage area. The water extracted from the waste material of vegetable origin is rich of nutritious substances and polyphenols and can be, then, used in the agricultural field as fertilizer, or in the pharmaceutical or cosmetic fields.

In particular, a means can be provided for grinding the dehumidified product present in the treatment chamber. More precisely, the means for grinding act in the treatment chamber and is therefore adapted to grind the product already pressed present in the treatment chamber obtaining a ground product. This makes it possible to optimize the step of dehumidification and to obtain a dehumidified product with a lower rate of humidity before cutting the protruding portion.

Furthermore, a control unit can be provided that is adapted to analyse the data measured through a plurality of sensors, such as temperature, pressure sensors, etc., for testing the correct operation of the apparatus.

In one form of the invention, at least one among the stem and the pushing element of the hydraulic actuator has at least one nozzle that is adapted to release a cleaning fluid in pressure, for example compressed air, towards the inner wall of the treatment chamber.

In particular, the press means pass from a starting withdrawn position, at which the waste material of vegetable origin is put into the treatment chamber, to a final advanced position in which it is arranged close to the opening/closing door and at which the dehumidified product is completely discharged from the treatment chamber.

During a full cycle, the press means moves from the starting withdrawn position to the final advanced position running through a predetermined number of intermediate positions, at which it is stopped for a predetermined time. More precisely, the press means, at determined intermediate positions, is stopped in advance for a time necessary to the opening/closing port to move from the closed position to the open position, then it is moved for a determined space to a intermediate successive positions, at which it is stopped again in advance for a time necessary to the cutting means to cut the portion of dehumidified product protruding from the treatment chamber.

### Brief description of the drawings

The invention will be made clearer with the following description of an exemplary embodiment thereof, exemplifying but not limitative, with reference to the attached drawings in which:
- figure 1 diagrammatically shows a partially cross sectioned elevational side view of a first exemplary embodiment of an apparatus to obtain fuel material starting from production waste of vegetable origin, according to the invention;
- figure 2 diagrammatically shows a partially cross sectioned elevational side view of the apparatus of Fig. 1, with the opening/closing door of the treatment chamber in an open position;
- figures 3 and 4 show diagrammatically perspective views of two possible exemplary embodiments of the invention for the treatment chamber of the apparatus of Fig. 1;
- figure 5 diagrammatically shows a partially cross sectioned elevational side view of a first exemplary embodiment of the apparatus of Fig. 1;
- figure from 6 to 11 show diagrammatically a first succession of steps through which it is possible to carry out the method according to the invention, to

obtain fuel material starting from production waste of vegetable origin;
- figure 12 shows a possible exemplary embodiment of the cutting step shown in Fig. 9;
- figures 13 and 14 show diagrammatically a possible exemplary implementation of the method of Figs. 6-11 of the invention;
- figures from 15 to 22 show diagrammatically a succession of steps alternative to that shown in Figs. From 6 to 11 for carrying out the method according to the invention;
- figure 23 diagrammatically shows a cross sectional view of a possible exemplary embodiment of the pushing element provided in the apparatus according to the invention;
- figure 24 shows a further exemplary embodiment of the apparatus of Fig. 1.

### Detailed description of some exemplary embodiments

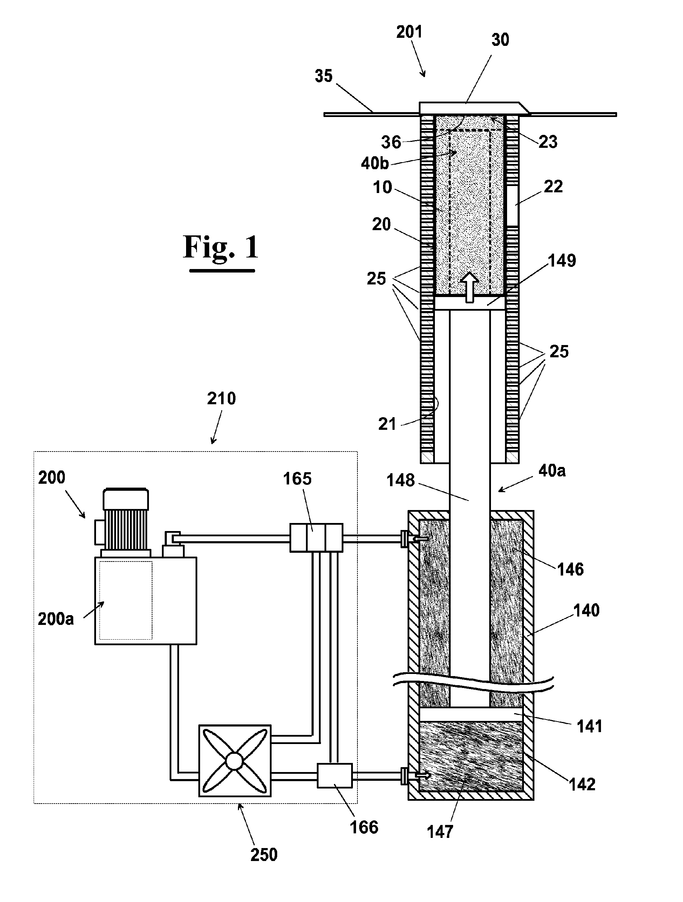

As shown in Fig. 1, an apparatus 1 to prepare a fuel product starting from a waste material of vegetable origin 10 comprises a treatment chamber 20 of tubular shape and defined laterally by a wall 21 at least in part equipped with a plurality of holes 25.

Treatment chamber 20 comprises a loading mouth 22, for example on wall 21, as shown in Fig. 1, through which a predetermined amount of waste material 10 is inserted. Loading mouth 22 is, advantageously, associated with a closure member not shown in the figures.

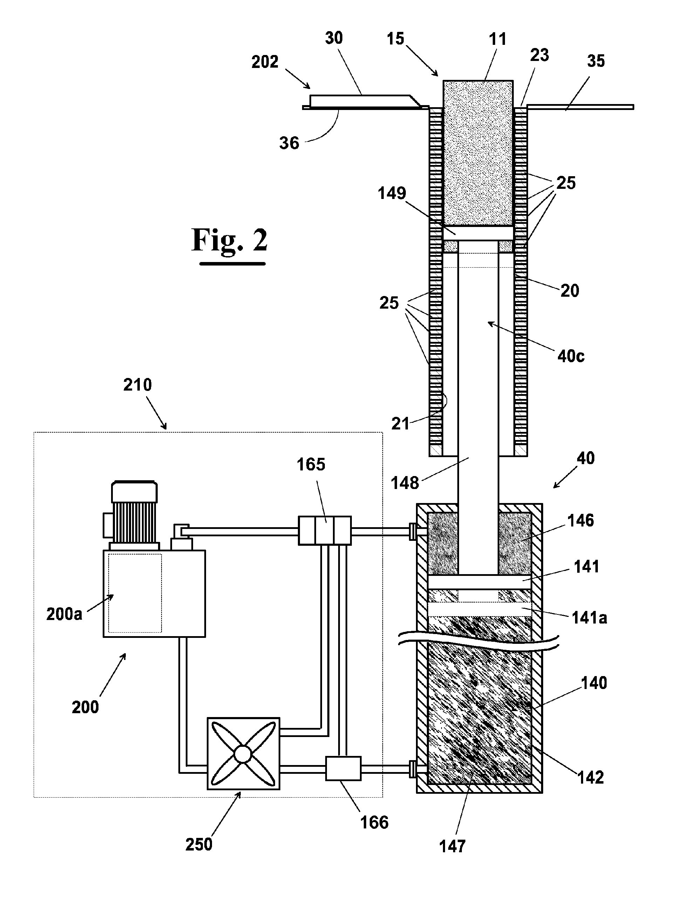

Treatment chamber 20 is, furthermore, for example at one end 23, equipped with an opening/closing port 30. This is mobile, in particular slidable, between a closed position 201 (Fig. 1) and an open position 202 (Fig. 2) of treatment chamber 20. Opening/closing port 30 of treatment chamber 20 can be slidingly mounted along rails 35 arranged substantially orthogonal to treatment chamber 20.

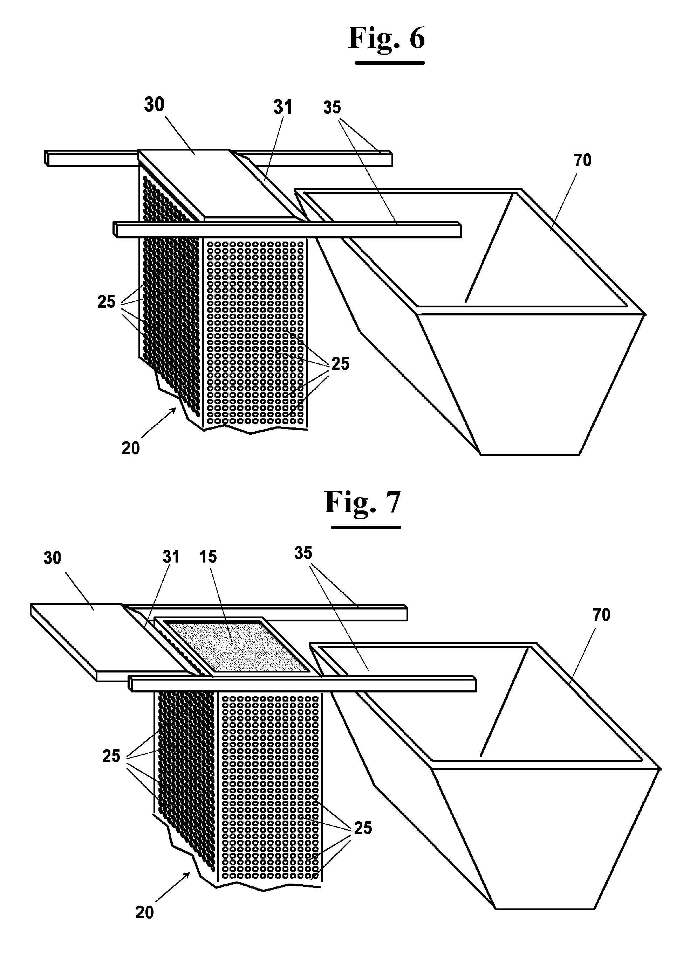

In treatment chamber 20 a press means 40 acts, for example located opposite to opening/closing port 30 with respect to waste material 10. More in detail, press means 40 is adapted to press waste material 10 against opening/closing port 30, in order to cause an exit of the humidity present in waste material 10 through the plurality of holes 25, obtaining a dehumidified waste material 15 (Fig. 7). Notwithstanding in Fig. 1 loading mouth 22 is shown arranged at wall 21, it is not excluded that the product to treat is inserted through end 23 of treatment chamber 20.

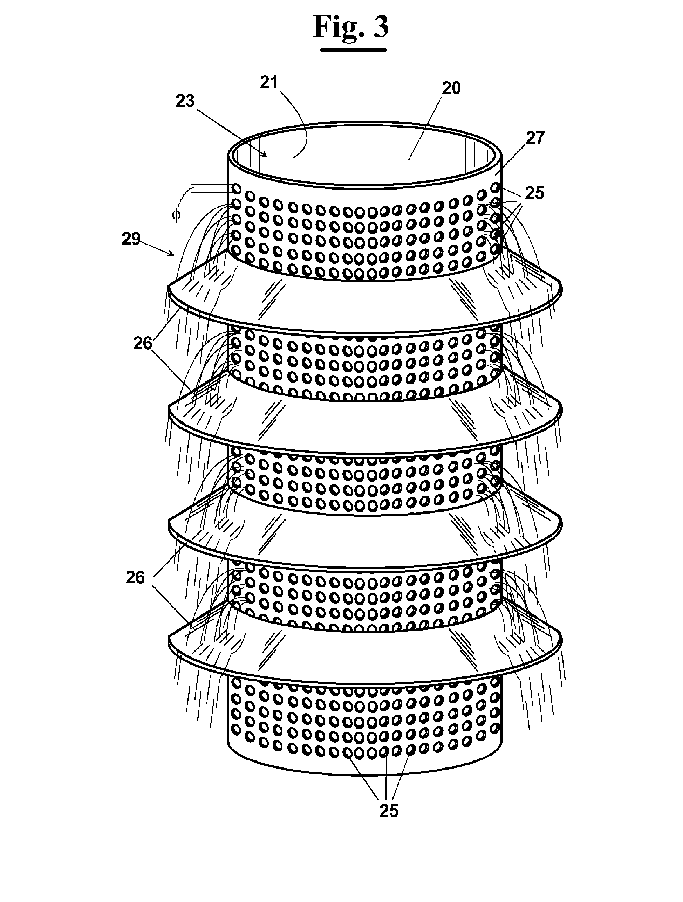

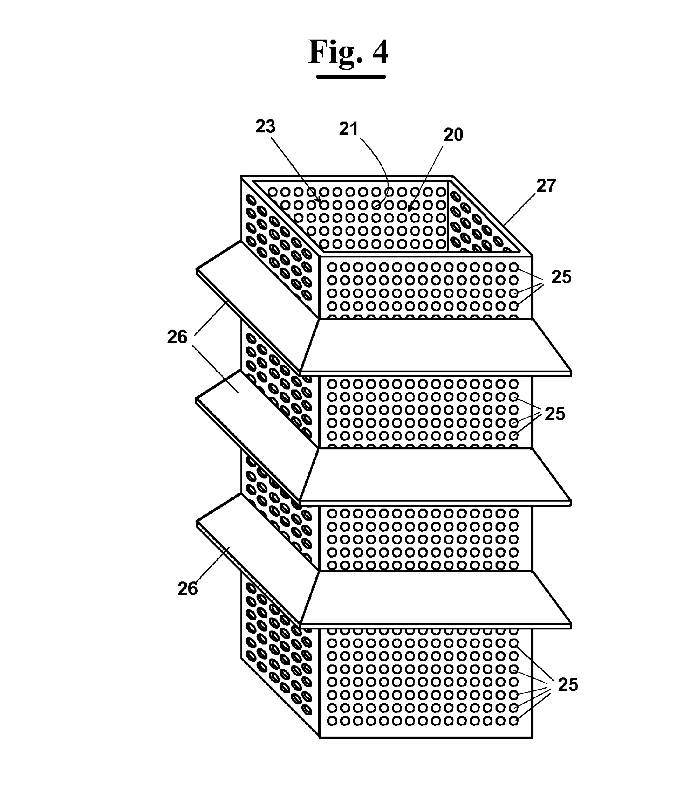

As shown in detail in Figs. 3 and 4, treatment chamber 20 may have cylindrical shape (Fig. 3), or prismatic shape (Fig. 4). However, treatment chamber 20 may also have frustoconical shape, conic shape, etc. Holes 25 have advantageously, a diameter Φ less than 1.5 mm, in order to avoid the division of the treated product 15 during the step of pressing. Always with reference to Figs. 3 and 4, side surface 27 of treatment chamber 20 can be equipped with a plurality of slides 26 adapted to assist the outflow of the water extracted from the waste material treated into a storage area, not shown in the figures. The water 29 extracted from the waste material of vegetable origin is rich of nutritious substances and polyphenols and can be, then, used in the agricultural field as fertilizer, or in the pharmaceutical or cosmetic fields.

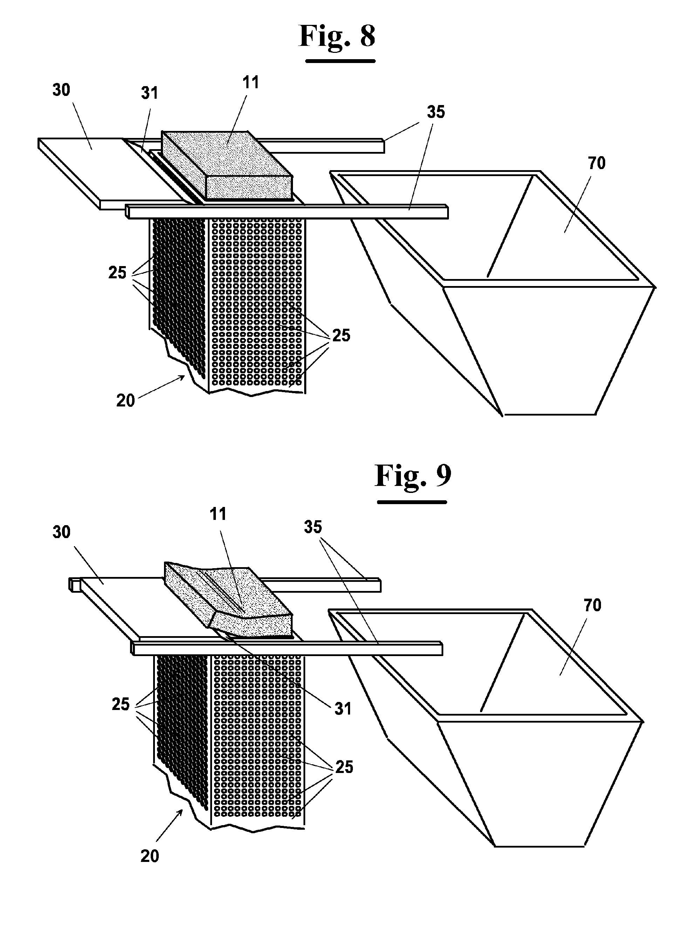

Once the rate of humidity has been reduced below a predetermined value, opening/closing port 30 is brought from closed position 201 to open position 202, in which it is arranged laterally with respect to treatment chamber 20. Then, press means 40 pushes dehumidified product 15 obtaining a portion 11 protruding from treatment chamber 20 (Figs. 2 and 8). Protruding portion 11 has a predetermined thickness and corresponds to the stroke portion run by press means 40 for pushing protruding portion 11 outside of treatment chamber 20.

Protruding portion 11 is then separated from the other portion of dehumidified product 15 through a cutting means arranged downstream of treatment chamber 20, obtaining a cut portion 19.

In particular, during a complete cycle, press means 40 passed from a starting withdrawn position 40a, for example the position depicted with a full line in Fig. 1, at which the waste material of vegetable origin 10 is put into treatment chamber 20, to a final advanced position 40b, indicated in Fig. 1 with a dashed line, at which press means 40 are arranged substantially at a same height of opening/closing door 30, and dehumidified product 15 is completely discharged from treatment chamber 20. In a preferred exemplary embodiment, during a full cycle, press means 40 moves from a starting withdrawn position 40a to a final advanced position 40b running through a predetermined number of intermediate positions 40c (Fig. 2). More precisely, press means 40, at determined intermediate positions 40c, stop in advance for a time necessary for opening/closing port 30 to move from closed position 201 to open position 202, then it is moved for a determined space up to reach an intermediate position 40c, for causing removal of a portion 11 of dehumidified product from treatment chamber 20. Portion 11 has, therefore, a height H equal to the portion for which press means 40 is moved from intermediate position 40c to a successive intermediate position 40c. Press means 40, then, stops in the intermediate position 40c in advance for a time necessary to the cutting means to cut and remove protruding portion 11. The cycle ends when all waste material 10 has been treated and then discharged from treatment chamber 20.

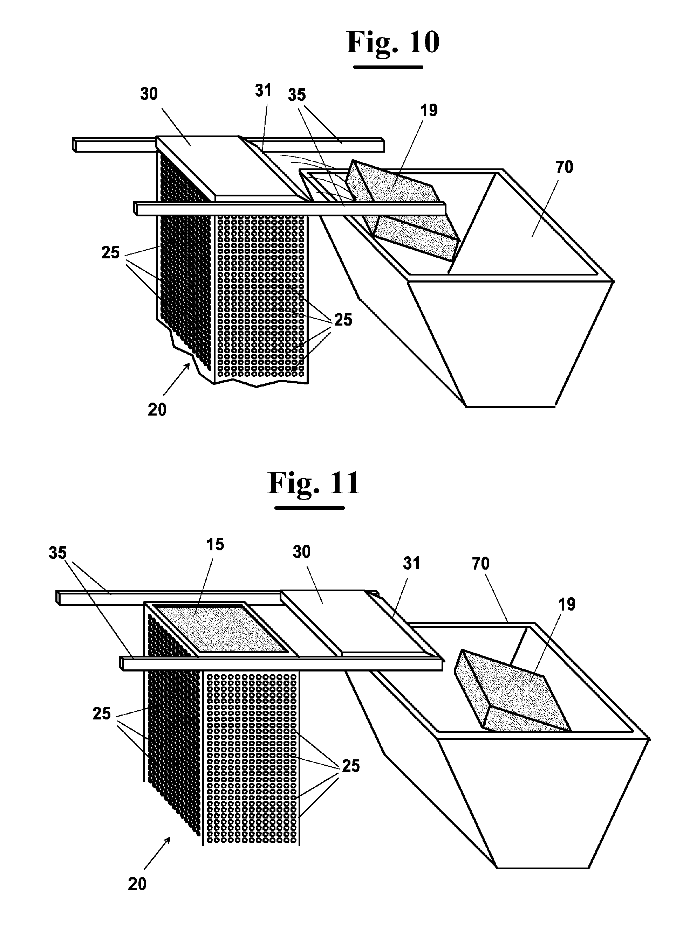

In an exemplary embodiment of the invention, as shown in Figs. 9 and 10, opening/closing port 30 is equipped with the cutting means. More precisely, at edge 31 oriented towards treatment chamber 20, opening/closing port 30 has a cutting profile.

In this case, once the rate of humidity of the treated product 10 is reduced below a predetermined value, opening/closing port 30 turns from closed position 201 to open position 202. Press means 40, which are temporarily deactivated during the step of opening treatment chamber 20, are then operated again for pushing dehumidified product 15 present in treatment chamber 20 through end 23, up to cause the exit of a portion 11 of determined length. Press means 40 are, then, stopped again in that position. Then, opening/closing port 30 slides again from open position 202 to closed position 201. During this step, cutting edge 31 of opening/closing port 30 cuts portion 11 up to causing a full disengagement from portion 15 present in treatment chamber 20 obtaining a cut portion 19. The latter is then pushed by a further sliding of opening/closing port 30 along rails 35 towards the collection area, for example a collecting hopper 70 located opposite to open position 202 with respect to treatment chamber 20.

As diagrammatically shown in Fig. 11 opening/closing port 30 during the cutting step can be caused to proceed beyond closed position 201, in order to bring cut portion 19 into hopper 70.

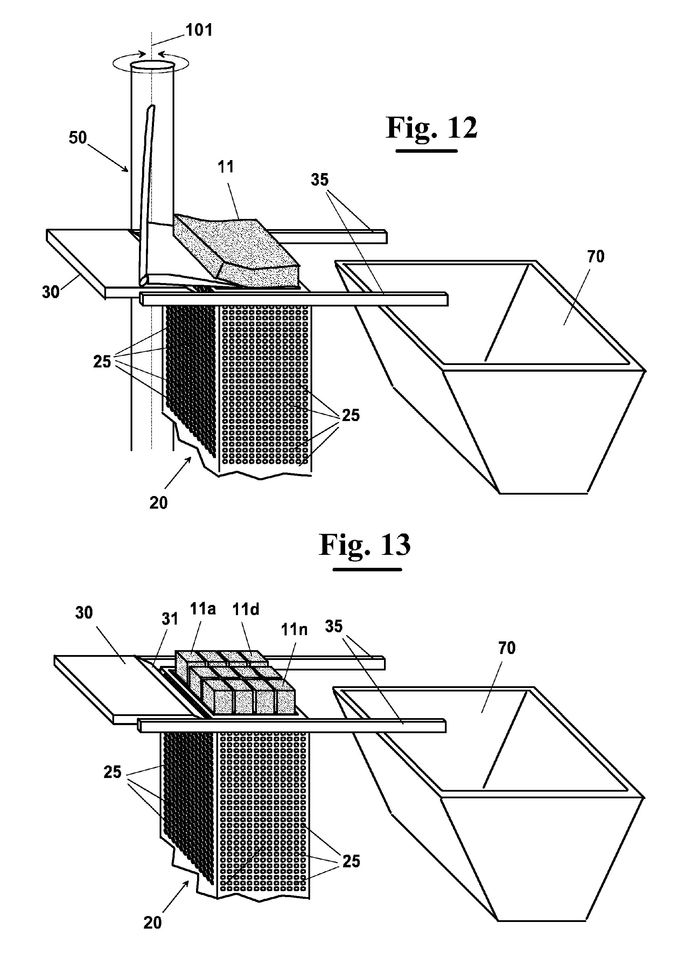

As shown in Fig. 12, the cutting means can comprise a blade 50 mounted rotatable about an axis 101. Blade 50 after having cut protruding portion 11 continues the rotation about its axis 101, in order to bring cut portion 19 to a collection area, for example a hopper 70, or a collection container, not shown in the figures.

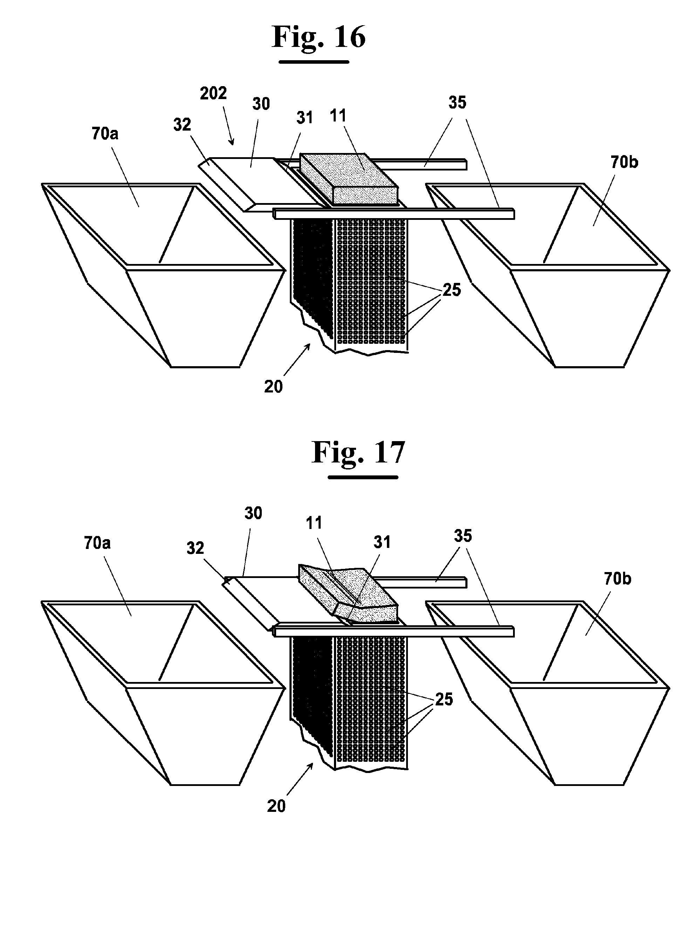

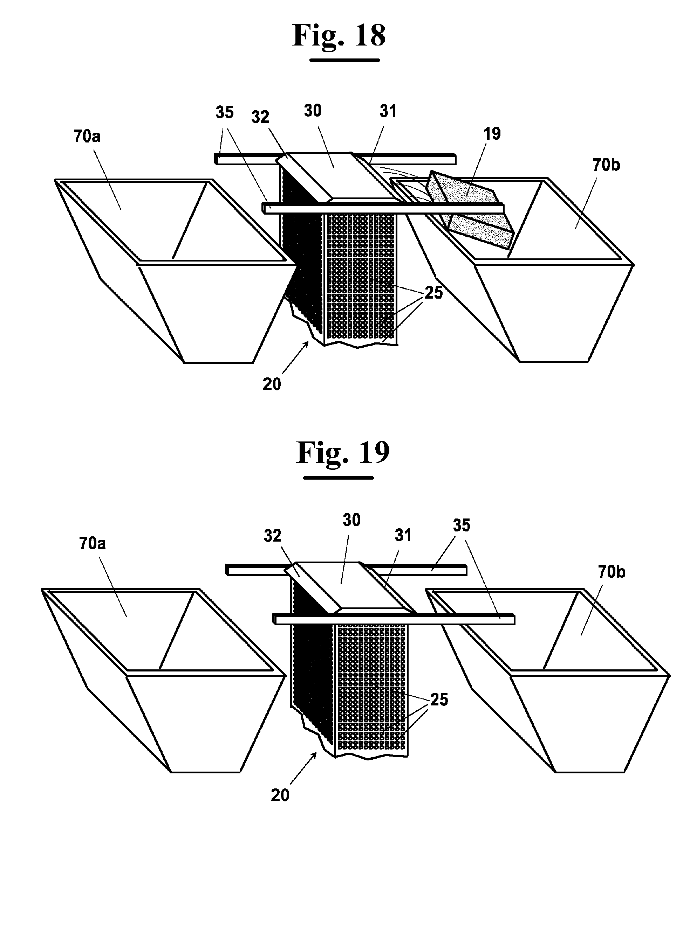

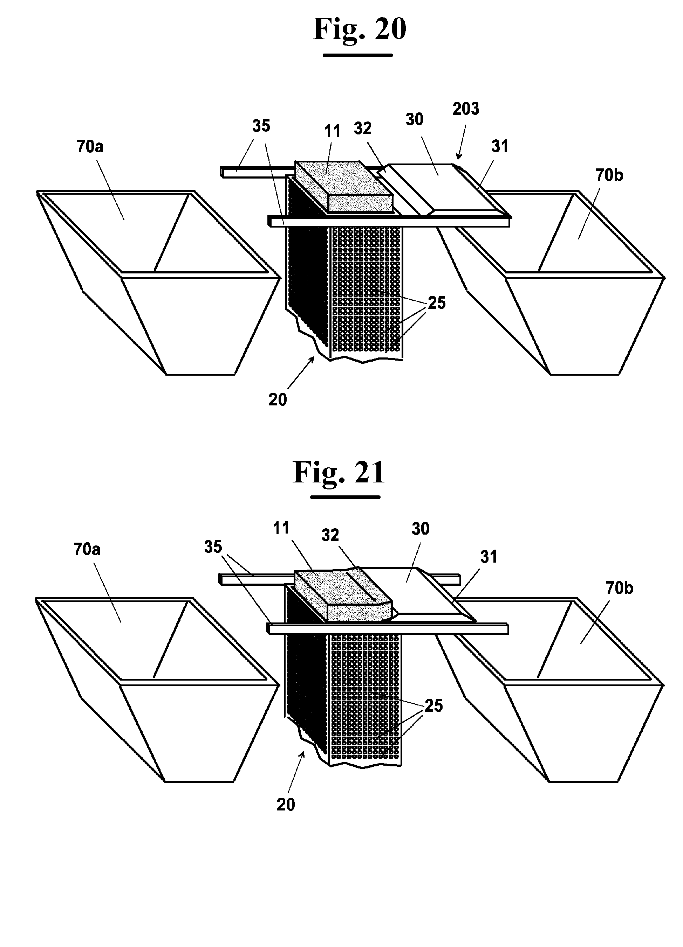

In an exemplary embodiment, opening/closing port 30 is slidingly mounted on rails 35 between a first open position 202 (Fig. 16) and a second open position 203 (Fig. 20), which is located laterally with respect to treatment chamber 20 opposite to closed position 201 (Fig. 18). In this case, a first hopper 70a and a second hopper 70b are provided located opposite to treatment chamber 20. In this case, opening/closing port 30 has a first cutting edge 31 and a second cutting edge 32 located opposite to first cutting edge 31.

More precisely, when opening/closing port 30 turns from the first open position 202 (Fig. 16) to closed position 203 (Fig. 17), cutting edge 31 cuts protruding portion 11 and pushes cut portion 19 into hopper 70b (Fig. 18).

Opening/closing port 30 returns then to closed position 201, in order to cause press means 40 to press the residue portion of dehumidified product against its surface 36 and to achieve a more complete dehumidification (Fig. 19).

From closed position 201 opening/closing port 30 can move to second open position 203, in order to cause press means 40 to push a portion 11 of the dehumidified product outside of treatment chamber 20 (Fig. 20).

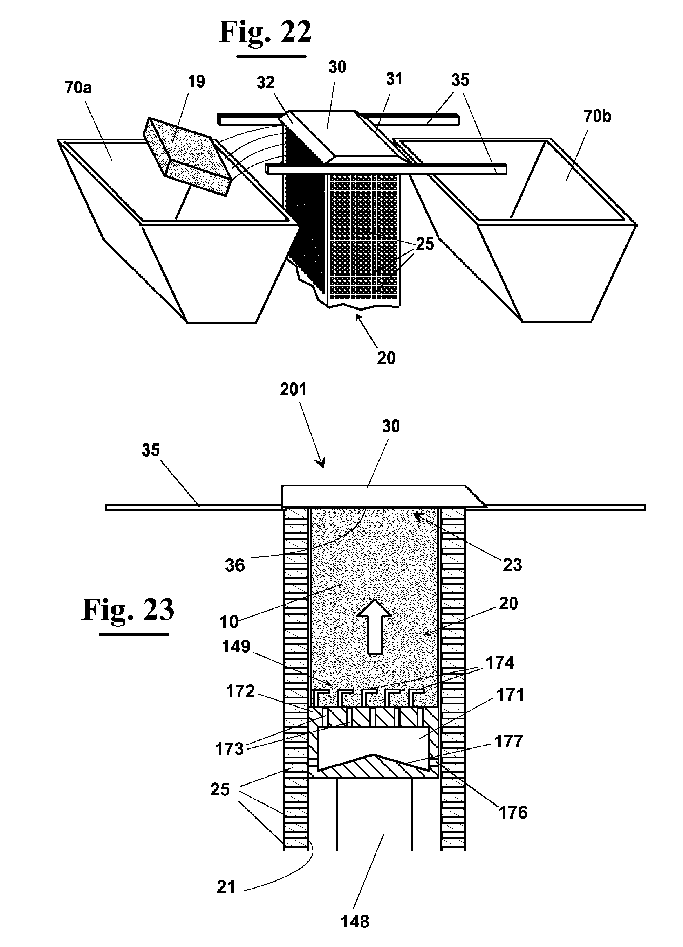

Then, during the return path of opening/closing port 30 from open position 203 to closed position 201, cutting edge 32 cuts protruding portion 11 up to cutting it and then pushing it into hopper 70b (Fig. 21 and 22).

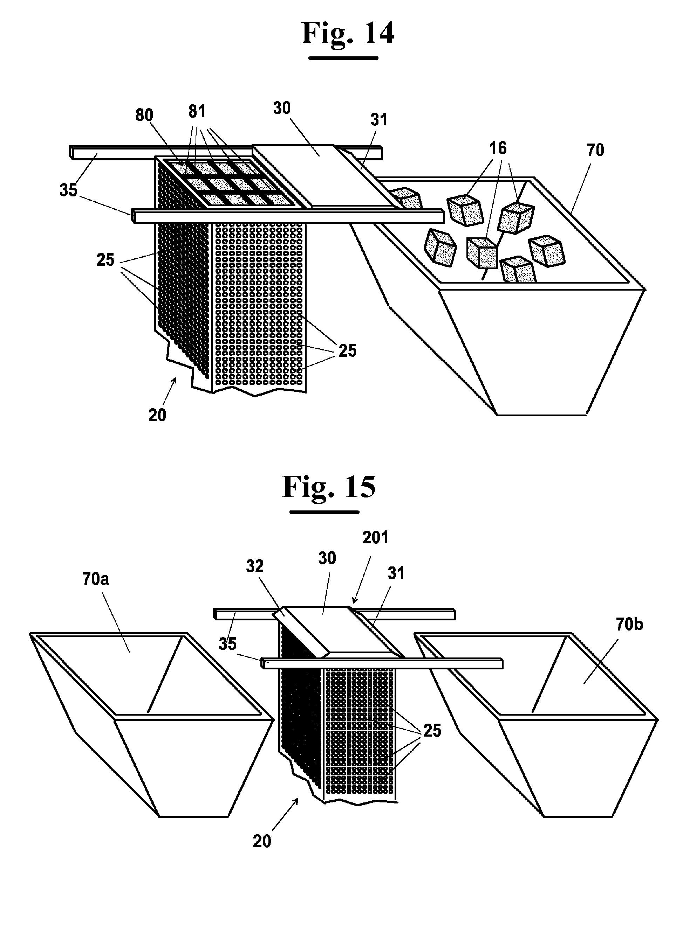

In a further exemplary embodiment, as shown in Figs. 13 and 14, between press means 40, which presses the waste material of vegetable origin 10, and opening/closing port 30, which opens/closes treatment chamber 20, a means is provided for dividing 80 the dehumidified product, in order to provide a divided product of predetermined size. For example, the division means 80 comprises a certain number of cables 81 against which dehumidified product 15 is pressed for dividing it into a corresponding number of blocks of dehumidified product.

In the case shown in Figs. 13 and 14, the division means 80 comprises five cables that are arranged in order to form a reticular structure for example with rectangular meshes. In this case, the cutting means, for example cutting edge 31 of opening/closing port 30, is adapted to cut the protruding portions 11a-11n into briquets 16 of predetermined size.

In a preferred exemplary embodiment of the invention, press means 40 comprises a hydraulic actuator 140 having a dividing wall 141 slidingly mounted in a cylinder 145. More precisely, dividing wall 141 is connected to one end of a stem 148 with a pushing element 149. In a possible exemplary embodiment, as diagrammatically shown in Fig. 23, pushing element 149 has a recess 171. More precisely, a surface 172 oriented towards the product to treat has a plurality of holes 173. Each hole 173 can be, furthermore, associated with a containing element 174, or tooth, with a substantially L-shaped cross section which is adapted to prevent the product to go beyond surface 172 and to cause at the same time the liquid to pass into recess 171 and from there to flow out through lateral apertures 176. A bottom 177 of recess 171 can be chute-shaped to assist the outflow towards the lateral apertures 176.

As shown in Figs. 1,2 and 5, dividing wall 141 divides the cylinder 145 into a first recess 146 and a second recess 147. During the pressing step of the waste material of vegetable origin 10, hydraulic fluid 150 present in recess 147 is heated by the pumping action made by the hydraulic control unit 200. In operation conditions, also the hydraulic fluid 150 present in the recess 146 is heated essentially by friction. Therefore, the hydraulic fluid 150 present in the recesses 146 and 147 has to be periodically cooled for not affecting the correct operation of the hydraulic actuator 140.

The cooling of the hydraulic fluid can be carried out by air by a fan 250. The latter is arranged along a hydraulic circuit 210 that is crossed periodically by the hydraulic fluid 150 moved by a hydraulic control unit 200. This way, the hydraulic fluid 150 can be moved towards/away from hydraulic cylinder 140 and through the hydraulic circuit 210 by the pump 200a of the hydraulic control unit, or by means of one or more auxiliary pumps, in addition to a certain number of valves, for example two valves 165 and 166 (Fig. 1). In the case of Fig. 1, the heat subtracted to the hydraulic fluid can be exchanged with the surrounding environment.

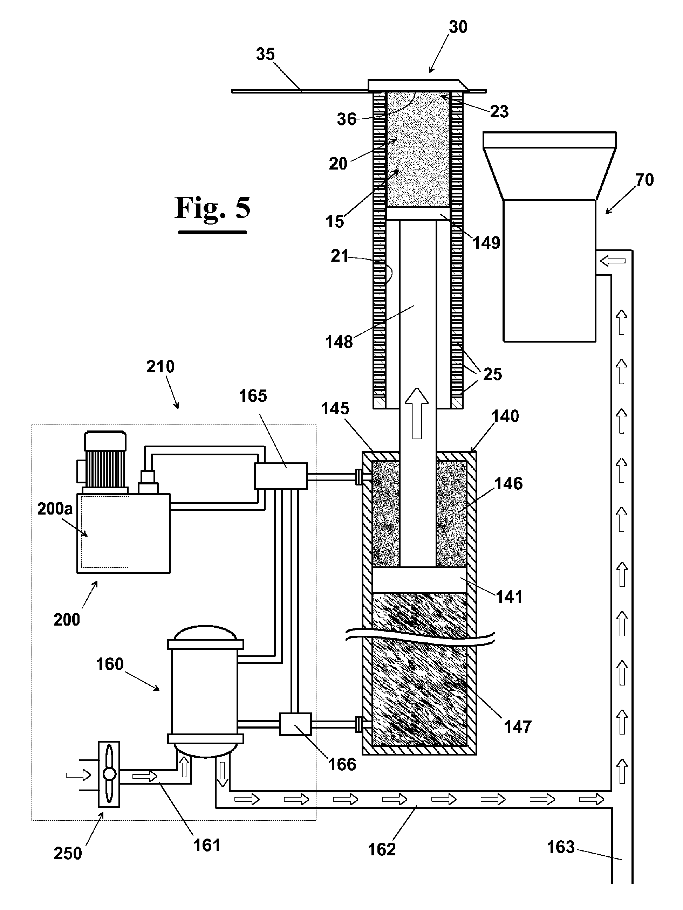

In an exemplary embodiment, as shown in Fig. 5, downstream of the cutting means a drying means can be provided for drying and reducing further the rate of humidity of the cut product 19. More precisely, in the case of Fig. 5, the means for drying comprises a heat exchange means through which the heat subtracted to the hydraulic fluid during the cooling step is delivered to the cut product 19, for example at hopper 70, in order to dry it.

In this case the hydraulic circuit 210 comprises at least one heat exchanger 160 for exchanging heat between air/hydraulic fluid, in which the heat subtracted to the hydraulic fluid is delivered to an air flow 161 at room temperature. The latter is therefore heated and generates a hot air flow 162 that flows around the cut product 19. In addition, or alternatively, a duct is provided of warm auxiliary air 163, which, along with current 162, or alone, heats the cut product 19 for drying it.

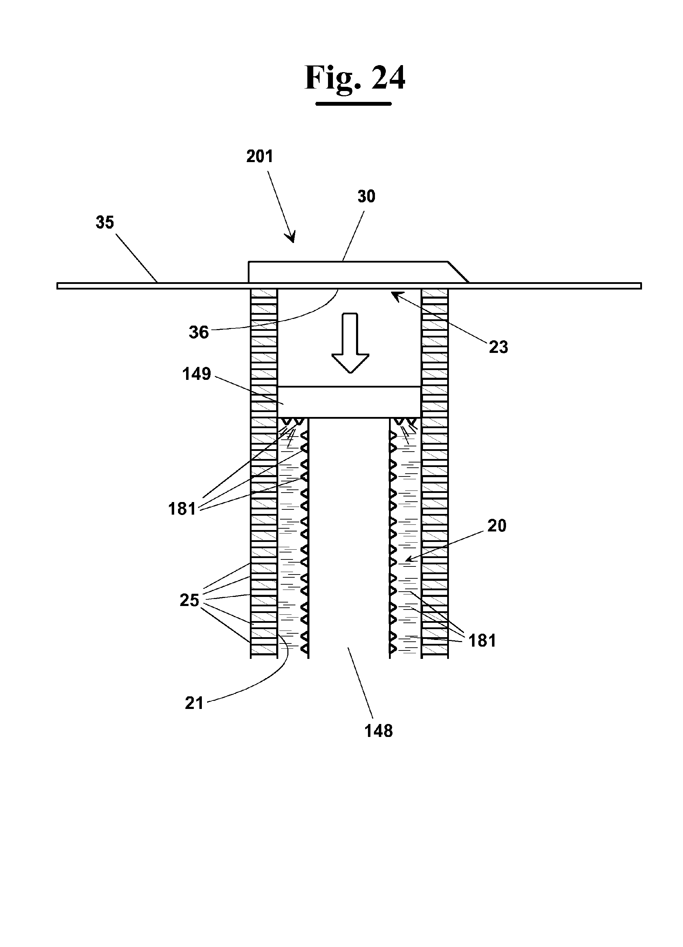

In a further exemplary embodiment, as shown in Fig. 24, at least one among the stem 148 and pushing element 149 of hydraulic actuator 140 has a predetermined number of nozzles 181 that are adapted to release a cleaning fluid 185 in pressure, for example compressed air, towards inner wall 21 of treatment chamber 20. The cleaning step thus achieved is adapted to remove possible solid residues deposited in the holes 25 of side wall 21 of treatment chamber 20. For example, the above described cleaning step is carried out during a step of withdrawing pushing element 149 in treatment chamber 20. More precisely, the step of withdrawing is carried out once dehumidified product 15 has been completely discharged from treatment chamber 20. At the end of the step of withdrawing hydraulic actuator 140 is arranged in a starting position at which the waste material of vegetable origin is put into the treatment chamber through loading mouth 22.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Process for preparing a fuel product starting from a waste material of vegetable origin, said process **characterised in that** it comprises the steps of:
- introducing a predetermined amount of said waste material of vegetable origin in a treatment chamber, said treatment chamber defined laterally by a wall at least in part equipped with a plurality of holes and equipped with a loading mouth of said waste material;
- pressing said waste material in said treatment chamber through a press means, said pressing step causing a removal of the humidity present in said waste material through said plurality of holes, thus making a dehumidified waste material, wherein an opening/closing port is provided movable between a closed position of said treatment chamber and an open position of the chamber same;
- opening said treatment chamber to achieve a rate of humidity less than a predetermined value of said material treated, said opening being carried out by moving said opening/closing port to said open position;
- moving said dehumidified product within said treatment chamber up to obtain a portion of dehumidified product protruding from said treatment chamber, said moving caused through said press means;
- cutting said dehumidified product protruding portion obtaining a cut portion, said cutting made through a cutting means;
- discharging said cut portion of said dehumidified product to a collection area.

2. Process for preparing a fuel product starting from a waste material of vegetable origin, according to claim 1, wherein said port is located opposite to said press means with respect to said waste material and said press means presses said waste material against a press surface of said opening/closing port of said treatment chamber.

3. Process for preparing a fuel product starting from a waste material of vegetable origin, according to claim 1, wherein said waste material of vegetable origin is a vegetable loose product, in particular obtained by squeezing vegetables, in particular olive residues.

4. Process for preparing a fuel product starting from a waste material of vegetable origin, according to claim 1, wherein at the end of said cutting step of said, or each, dehumidified product protruding portion, said opening/closing port of said treatment chamber returns to said closed position.

5. Process for preparing a fuel product starting from a waste material of vegetable origin, according to claim 1, wherein between said step of pressing and said step of opening said treatment chamber a step is provided of division of said dehumidified product obtaining a divided product of predetermined size, in particular blocks.

6. Process for preparing a fuel product starting from a waste material of vegetable origin, according to claim 1, wherein at the end of said cutting step of said, or each, protruding portion of dehumidified product a step is provided of returning said opening/closing port from said open position to said closed position, said press means pressing further the residue portion of dehumidified product present in said treatment chamber for reducing further the rate of humidity.

7. Process for preparing a fuel product starting from a waste material of vegetable origin, according to claim 1, wherein said opening/closing port is slidingly arranged along rails that are substantially orthogonal to said treatment chamber, said opening/closing port sliding along said rails for moving from said closed position to said open position and vice-versa.

8. Process for preparing a fuel product starting from a waste material of vegetable origin, according to claim 1, wherein a plurality is provided of pressing steps said waste material of vegetable origin, wherein between two successive steps of said plurality of pressing steps the further steps are provided:
- opening said treatment chamber;
- moving said product in said chamber up to obtain a portion protruding from said chamber;
- cutting said protruding portion of dehumidified product;
- closing said treatment chamber.

9. Process for preparing a fuel product starting from a waste material of vegetable origin, according to claim 1, wherein said opening/closing port has at least one cutting edge, said cutting step carried out by said cutting edge of said opening/closing port when passing from said open position to said closed position.

10. Process for preparing a fuel product starting from a waste material of vegetable origin, according to claim 1, wherein said opening/closing port is movable between a first open position and a second open position opposite to the first open position with respect to said treatment chamber, and said opening/closing port has a first cutting edge and a second cutting edge opposite to the first cutting edge, said cutting step carried out by said first cutting edge during the movement of said opening/closing port from said first open position to said closed position, said cutting step being, instead, carried out by said second cutting edge during the movement of said opening/closing port from said second open position to said closed position.

11. Process for preparing a fuel product starting from a waste material of vegetable origin, according to claim 1, wherein downstream of said step of discharging a step is provided of drying said dehumidified cut product, said drying step is adapted to reduce further the content of humidity of said dehumidified product obtaining a dried product.

12. Process for preparing a fuel product starting from a waste material of vegetable origin, according to claim 1, wherein said press means is of hydraulic type and comprises at least one hydraulic actuator having a cylinder in which a dividing wall is slidingly mounted, said dividing wall adapted to divide the cylinder into a first and a second recess occupied in use by a hydraulic fluid, and a heat recovery means is provided that is adapted to subtract heat from said hydraulic fluid and to deliver it to said dehumidified cut product.

13. Process for preparing a fuel product starting from a waste material of vegetable origin, according to claim 1, wherein before said cutting step a grinding step is provided for grinding said dehumidified product present in said treatment chamber obtaining a ground product, said grinding step followed by a further step of pressing said ground product.

14. Process for preparing a fuel product starting from a waste material of vegetable origin, according to claim 1, wherein, furthermore, a step is provided of cleaning said treatment chamber, said cleaning step adapted to remove possible solid residues deposited in said holes of said side wall, in particular said step of cleaning said chamber being carried out during a step of withdrawing said pushing element in said treatment chamber, said step of withdrawing occurring once said dehumidified product has been completely discharged away from said treatment chamber.

15. Apparatus to make a fuel product starting from a waste material of vegetable origin **characterised in that** it comprises:
- a treatment chamber of the waste material of vegetable origin, said treatment chamber defined laterally by a wall at least in part equipped with a plurality of holes and comprising a loading mouth through which a predetermined amount of said waste material of vegetable origin is put into said treatment chamber;
- an opening/closing port of said treatment chamber, said port movable between an open position and a closed position of said treatment chamber;
- a press means that acts in said treatment chamber, said press means located opposite to said opening/closing port with respect to said waste material and adapted to press said waste material present in said treatment chamber, in order to cause the exit of the humidity present in said waste material through said plurality of holes obtaining a dehumidified waste material;
- cutting means that is adapted to cut at least one portion of said dehumidified product protruding from said treatment chamber, said protruding portion being pushed outside of said treatment chamber by said press means, said cutting means cutting said protruding portion obtaining a cut portion that is delivered to a collection area.
